# EUROPEAN PATENT SPECIFICATION

(11) **EP 0 615 491 B1**
(45) Date of publication and mention of the grant of the patent: **20.03.1996**
(21) Application number: 93900019.6
(22) Date of filing: 04.12.1992
(51) Int. Cl.: B44F 1/02, D06N 7/04

(54) **A TARPAULIN PROVIDED WITH A DECORATION OF A REFLECTING MATERIAL AND A METHOD OF MAKING IT**
MIT REFLEKTIERENDEM MATERIAL VERSEHENE PLANE UND VERFAHREN ZUR HERSTELLUNG
BACHE DECOREE D'UN MATERIAU REFLECHISSANT ET SON PROCEDE DE FABRICATION

(30) Priority: 04.12.1991 DK 1956/91
(43) Date of publication of application: 21.09.1994
(73) Proprietor: OPPENHEJM, Ulrich, DK-2970 Horsholm (DK)
(72) Inventor: OPPENHEJM, Ulrich, DK-2970 Horsholm (DK)
(74) Representative: Nyeng, Joergen
(86) International application number: DK9200367
(87) International publication number: WO9310985

(56) References cited:
- GB-A- 2 255 313
- SE-B- 365 163

## Description

The invention concerns a tarpaulin comprising a fabric coated with a plastics material, preferably PVC, polyamide or polyprene, and provided with a reflecting decoration, as well as a method of providing a tarpaulin with such a reflecting decoration.

Today tarpaulins usually consist of a fabric coated with a plastics material. The fabric must be strong and durable and is therefore most frequently made of polyester. The plastics coating must likewise be strong and durable, and it must moreover have a certain toughness and flexibility. It is mostly made of PVC or of a polyamide, such as nylon or aramide, or a polyprene, such as chloroprene rubber. Tarpaulins are used for many cover purposes, e.g. within the building industry, and in particular for covering trucks. They are also used for making larger tents, e.g. for use in temporary military quarters and refugee camps as well as for public events.

It is common practice to print logos, company names, slogans, instructions and other decorations on truck tarpaulins, for informative and for advertising purposes. It would be a great advantage, both with respect to the advertising value and the traffic safety, if such decorations could be made of a reflecting material or could be combined with reflecting stripes or patterns, e.g. along the edges of the tarpaulins. In particular, this could contribute to making the trucks visible at night when the usually dark tarpaulins are otherwise difficult to see. According to UN rules on traffic safety, trucks and trailers are to be provided with rear truck planks, i.e. usually aluminium plates with yellow reflection, downwardly on the rear end. In general, the ordinary rules are that rearward reflectors are to be red, lateral reflectors to be yellow and forward reflectors to be white. However, reflectors arranged on the body or chassis of trucks will often be coated with dirt, and even when visible they do not give a sufficient impression of the size of the vehicle.

Various reflective materials may be considered for application on tarpaulins. Paint or inks containing reflecting pigments are not suitable, partly because they are not durable exposed to wind and weather. The best reflection effect is obtained with so-called retroreflecting films or sheets, of which substantially two types are known: One is the glass bead type comprising a large number of fine glass beads embedded with specular base in a plastics sheet. The other is the prism (or cube corner) type with a large number of prism-shaped depressions impressed in one surface of a plastics sheet so that light from the other side is reflected through the sheet. A naked prism type reflecting sheet must have free air at the rear side in order to reflect. A more recent form of the prism type reflecting sheet is coated with a thin layer of metal such as aluminium on the impressed surface in order to achieve an even better reflection which is not dependent on the background. Another recent form of the prism type reflecting sheet is a multi-layer sheet provided with a sealing layer behind the air-filled depressions.

It has been attempted to glue a reflective transfer sheet of the glass bead type on a truck tarpaulin, but it was not durable, and the reflecting sheet rapidly flaked off.

A reflecting sheet of the naked prism type cannot be applied at all in this manner, because there must be air on the rear side (the impressed side) for it to reflect. The normal way of applying a reflecting sheet of the prism type to a base, e.g. a PVC sheet, in order to seal the rear side is by high frequency welding along the edge of the desired decoration and, in case of large surfaces, along crisscross lines to divide the face into reflecting sections. Of course, this requires that the reflecting sheet and the base are of the same type or are at least compatible so that they can be welded together by fusion. A corresponding method can be used for fixing a reflecting sheet of the glass bead type on a base if the sheet and the base are compatible. However, it is not practical to use high frequency welding for fixing reflecting sheets on tarpaulins, since this would require that the entire tarpaulin was moved intermittently through the high frequency welding machine or the machine moved intermittently along the tarpaulin carefully positioning the welding tool in each step, which would be very cumbersome with existing apparatus. Further, a reflecting sheet of the uncoated prism type shows the highest reflection with a white or light-coloured background, while tarpaulins often have a dark colour, and a reflecting sheet of the metallized prism type cannot be high frequency welded at all, because the metal layer reflects the microwaves.

A generally used method of fixing a reflecting sheet of the glass bead type on a base is to provide the sheet with a heat activatable glue on the rear side to provide a reflective transfer sheet and adhere it to the base by applying pressure and heat. However, this method cannot be used on tarpaulins, since these cannot be inserted into the existing heat presses for this purpose, and there is no other apparatus by means of which the necessary pressure and the necessary temperature and heating time on a tarpaulin can be achieved.

A last possibility might be to sew the reflecting sheet on the tarpaulin, but this would lead to holes in the tarpaulin, which would make it leaky and would reduce its strength.

The object of the invention is to provide a tarpaulin which is provided with a durable reflecting decoration, without this reducing its strength in any manner, and to provide a practicable method of providing a tarpaulin with such a reflecting decoration.

The tarpaulin of the invention is unique in that it carries a piece of reflecting sheet anchored to a piece of tarpaulin cloth, whose plastics coating is of the same type as or is compatible with that of the tarpaulin, by high frequency welding or heat application, said piece of tarpaulin cloth provided with reflecting sheet, optionally formed in a desired shape, being applied to the tarpaulin by hot air fusion.

The method of the invention is unique in that a reflecting sheet is anchored to a piece of tarpaulin cloth, whose plastics coating is of the same type as or is compatible with that of the tarpaulin, by high frequency welding or heat application, and then the piece of tarpaulin cloth provided with reflecting sheet, optionally formed in the desired shape, is applied to the tarpaulin by hot air fusion.

The tarpaulin on which the reflecting decoration is applied by the method of the invention, may e.g. be made of the above-mentioned materials and preferably consists of a polyester fabric coated with PVC. Such tarpaulins are manufactured by e.g. Duratex A/S, Norgesvej 49, DK-6100 Haderslev, Denmark, under the trade mark "duralak"; by Hammersteiner Kunststoffe GmbH, Rheinstrasse 11, D-5142 Hückelhoven, Germany, under the trade mark "Haku"; and by Sattler Textilwerke OHG, Sattlerstrasse 45, A-8041 Graz-Thondorf, Austria, under the trade mark "Complan® PVC". The heaviness of the tarpaulin cloth will usually be 300-1500 g/m², but it may also be more.

The reflecting sheet which is applied is expediently a retroreflecting sheet of the glass bead type comprising a large number of fine glass beads embedded in a specular base in a plastics sheet, or of the prism (cube corner) type with a large number of prism-shaped depressions impressed in the surface of a plastics sheet so that light is reflected through the sheet and optionally coated with a thin layer of metal such as aluminium on the impressed surface or backed by a sealing layer. Retroreflecting sheets of the glass bead type are manufactured i.a. by Minnesota Mining and Manufacturing Company, 2501 Hudson Road, Saint Paul, Minnesota 55101, U.S.A., under the trade mark "Scotchlite® 8710", and by Unitika Sparklite Co., Ltd., Chiyokawa-Cho, Kameoka, Kyoto, Japan, under the trade mark "Unitika MR 3501". Retroreflecting sheets of the naked prism type are manufactured i.a. by Reflexite Corp., 315 South Street, P.O. Box 1200, New Britain, CT 06050, U.S.A., under the trade mark "Reflexite® Vinyl IRE". Retroreflecting sheets of the metallized prism type are manufactured i.a. by Reflexite Corp. under the trade mark "Reflexite® AP 1000". Retroreflecting sheets of the sealed prism type are prepared i.a. by Minnesota Mining and Manufacturing Company under the trade mark "Scotchlite® Diamond Grade" and by Stimsonite Corp., 7542 N. Natchez Ave., Niles, IL 60648-3804, U.S.A., under the trade name "Stimsonite® Series 4200". Preferably, the reflecting sheet is a retroreflecting PVC sheet of the naked prism type.

When the reflecting sheet consists of PVC or another thermoplastic material, which is compatible with the plastics coating of the tarpaulin cloth, it is anchored to a piece, e.g. a band, of tarpaulin cloth by high frequency welding. This is done most conveniently in an automatic high frequency welding machine, where a band of the reflecting sheet put together with a band of tarpaulin cloth is moved intermittently through and welded by means of a band tool, which welds the reflecting sheet in narrow stripes longitudinally and transversely so that reflecting sections are formed. If reflecting logos are to be applied, use is made of another welding tool which welds along the contour of the logo and is provided with a cutting edge which simultaneously cuts out the welded logo. It is most practical that the machine yields a power of 7-12 kW. Such high frequency welding machines are available from e.g. Kif Parechoc S.A., 19 Rue G.-H. Piguet, CH-1347 Le Sentier, Kanton Vaud, Switzerland, under the trade mark "Kifel"®, and from Evald A. Nyborg A/S, Industriskellet 2, Vassingerød, DK-3540 Lynge, Denmark under the trade mark "Weldan"®.

Retroreflecting sheets of the glass bead type or the metallized or sealed prism type may be difficult or impossible to weld by high frequency. Instead they can be applied to a piece of tarpaulin cloth by means of an adhesive and anchored to said piece and protected by placing a transparent flexible film of a polymeric material compatible with the plastics coating of said piece on top of the reflecting sheet with its edges extending beyond those of the reflecting sheet and high frequency welding it to the piece of tarpaulin cloth along the edges. Then the piece of tarpaulin cloth provided with reflecting sheet is applied to the tarpaulin by hot air fusion.

Thus an embodiment of the tarpaulin of the invention incorporating these types of reflecting sheet showing the highest reflection is unique in that it carries a reflecting sheet of the glass bead type or the metallized or sealed prism type applied to a piece of tarpaulin cloth by adhesion and anchored to said piece and protected by an overlying transparent flexible film of a polymeric material compatible with the plastics coating of said piece, the edges of said film extending beyond those of the reflecting sheet and being high frequency welded to the piece of tarpaulin cloth, said piece being in turn applied to the tarpaulin by hot air fusion.

When the reflecting sheet is of the glass bead type with a heat-activatable adhesive on the rear side, it can be anchored to a piece of tarpaulin cloth by heat application. This is done most conveniently in a conventional heat presse for transfer of transfers, a piece of reflecting sheet put together with a piece of tarpaulin cloth being heated to 120-180 °C at a pressure of e.g. 276-310 kPa for 5-20 s. Where reflecting bands are to be manufactured, the band of reflecting sheet and tarpaulin cloth may be moved continuously through a heat presse with pressure bands, e.g. of the mark "Reliant"®, where they are subjected to the above-mentioned temperature and pressure conditions with a corresponding period of residence.

According to the invention, it is particularly expedient that the piece of tarpaulin cloth provided with reflecting sheet is applied to the tarpaulin by means of a hot air apparatus, whose hot air jet is introduced between the underside of the tarpaulin cloth and the surface of the tarpaulin so that the tarpaulin cloth is fused to the tarpaulin, without the reflecting sheet being damaged. In this connection it is best that the temperature of the hot air jet is 400 - 600 °C, and the heating time and the pressure to be applied depend upon the temperature and the type of thickness of the material.

Hot air devices that may be used are known within the field for applying reinforcing bands and edges in the manufacture of tarpaulins and for application of patches and joints in the repair of tarpaulins. However, in the past it was not possible to apply reflecting sheets by means of such hot air devices, since they would melt the sheet and destroy the reflection effect.

Such hot air devices are manufactured by Karl Leister Elektrogerätebau, CH-6056 Kägiswil, Kanton Obwalden, Switzerland, under the trade mark "Leister"®, both as hand devices, where the piece of tarpaulin cloth provided with reflecting sheet is pressed firmly against the tarpaulin with a hand roller after heating, and as rolling devices for applying long bands of tarpaulin cloth, where the band provided with reflecting sheet is adhered to the tarpaulin at each end, the mouthpiece of the hot air device is inserted below the edge of the band, and the device is rolled along the band, while a roller mounted on the device moves on top of the band after the mouthpiece and presses the heated band firmly against the tarpaulin.

Although as mentioned previously it is a very cumbersome procedure to weld a compatible reflecting sheet directly to a tarpaulin with existing high frequency welding apparatus, and for some types of reflecting sheet it is in fact unfeasible, it has now been found according to the invention that it is possible to apply a reflecting sheet of the glass bead type or the metallized or sealed prism type directly to a tarpaulin by means of an adhesive and anchor it to the tarpaulin and at the same time protect it by placing a transparent flexible film of a polymeric material compatible with the plastics coating of the tarpaulin on top of the reflecting sheet with its edges extending beyond those of the reflecting sheet and high frequency welding it to the tarpaulin along the edges.

Therefore, another tarpaulin according to the invention is unique in that it carries a piece of reflecting sheet of the glass bead type or the metallised or sealed prism type applied directly to the tarpaulin by adhesion and anchored to the tarpaulin and protected by an overlying transparent flexible film of a polymeric material compatible with the plastics coating of the tarpaulin, the edges of said film extending beyond those of the reflecting sheet and being high frequency welded to the tarpaulin.

The transparent flexible film to be used in the last mentioned embodiments of the tarpaulin of the invention must be made of a polymeric material compatible with the plastics coating of the piece of tarpaulin cloth and the tarpaulin, respectively, and it should be tough, weather resistant and UV stabilized and have a smooth surface. The transparent flexible film may be colourless, or it may be coloured e.g. yellow, red or other desired colour to produce coloured reflections.

The invention also provides a piece of tarpaulin cloth to which a reflecting sheet is anchored by high frequency welding or heat application to be applied as a reflective decoration to a tarpaulin by hot air fusion.

The previously mentioned types of reflecting sheet may be used in this piece of tarpaulin cloth, the preferred type being a retroreflecting PVC sheet of the naked prism type.

A special embodiment of this piece of tarpaulin cloth has a reflecting sheet of the glass bead type or the metallized or sealed prism type applied to it by adhesion and anchored to it and protected by an overlying transparent flexible film of a polymeric material compatible with the plastics coating of said piece, the edges of said film extending beyond those of the reflecting sheet and being high frequency welded to said piece.

The piece of tarpaulin cloth furnished according to the invention is advantageously in the form of a narrow band which may be wound up in a roll and unwound during the application to the tarpaulin by hot air fusion.

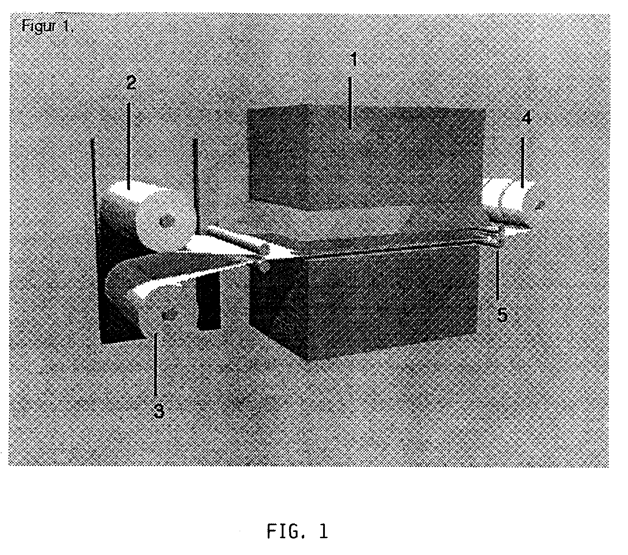

In the drawings, Figure 1 shows how a band of reflecting sheet 2 and a band of tarpaulin cloth 3 from their respective rolls are moved together through a high frequency welding machine 1 and emerge as a reflective band of tarpaulin cloth 4 and wound in a roll. The machine is also provided with a cutting tool 5 cutting suitable lengths of the reflective band, preferably in a weld.

Figure 2 shows fusion of a reflective band 4 on a tarpaulin 6 by means of a travelling hot air apparatus 7. The figure shows a fused piece of tarpaulin cloth with reflecting logo 8.

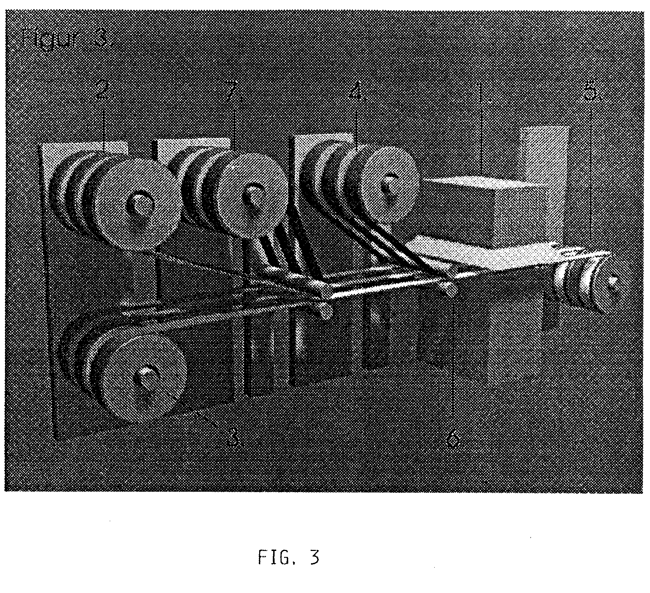

Figure 3 shows how bands of reflection sheet 2 and bands of transparent PVC film 4 having a slightly larger width than 2 are laid down, 4 on top of 2, on bands of tarpaulin cloth 3 having at least the same width as 4 and are pressed together by rolls with moderate heating 6 whereafter the aggregate bands are moved through a high frequency welding machine 1 in which the PVC film is welded to the tarpaulin cloth along the edges extending beyond the edges of the reflection sheet, and emerge as reflective bands 5 which are wound in rolls. The starting bands of reflecting sheet 2 may be supplied with a protecting band of silicone paper which is then drawn off and wound in rolls 7.

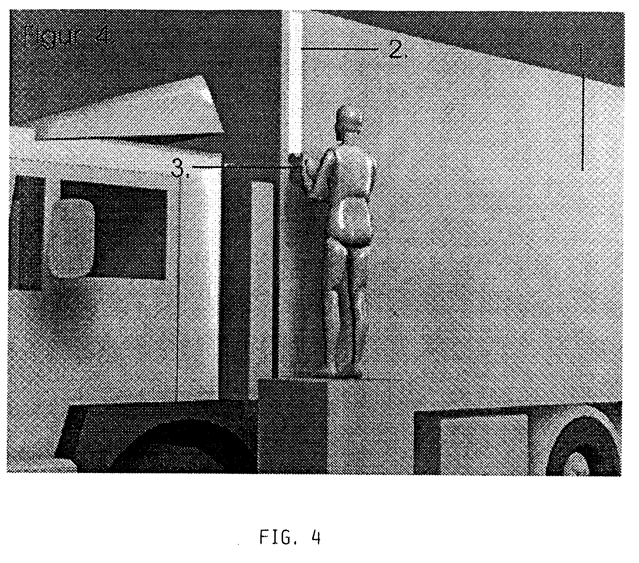

Figure 4 shows how a reflective band 2 of tarpaulin cloth according to the invention is applied to a tarpaulin 1 mounted on a truck, by means of a hot air device 3 with a built-in roll of reflective band.

### EXAMPLE 1

A roll of reflecting sheet of the naked prism type, "Reflexite® Vinyl IRE", was high frequency welded on a roll of tarpaulin cloth with a PVC coating, "duralak", in a high frequency welding machine, "Kifel"®, with a power of 12 kW, as shown in Fig. 1. The reflecting sheet is usually available in rolls with a width of 9" (229 mm) or 27" (686 mm), and the roll of tarpaulin cloth is cut in the same or slightly greater width from a tarpaulin roll with a normal width of 1400-2000 mm.

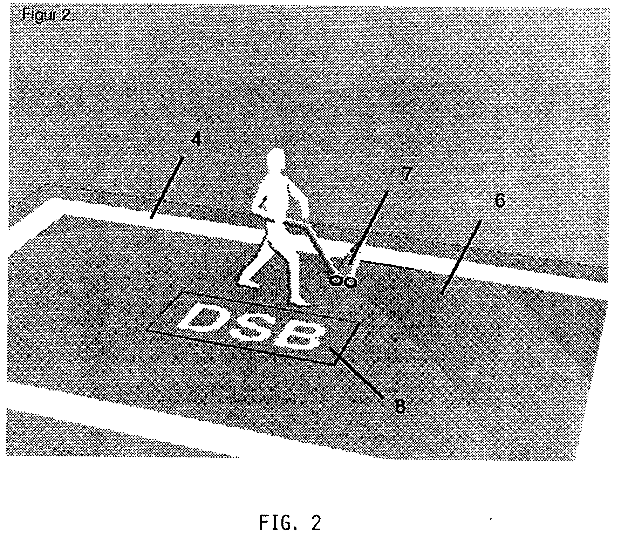

The band of tarpaulin cloth with welded reflecting sheet is placed on a tarpaulin of the mark "duralak" and fixed at each end with staples. It is fused on the tarpaulin, as shown in Fig. 2, by inserting the mouthpiece of a travelling hot air apparatus of the mark "Leister"® from the side inwardly below the edge of the band with the roll on top of the band, and the apparatus is moved along the band, while hot air at a temperature of 400-600 °C is blown below it. The roll presses the fused surfaces together so that this side of the band is welded to the tarpaulin. Then the procedure is repealed on the opposite side of the band.

The tarpaulin is thus provided with a reflective band which works homogeneously with the tarpaulin at stretching, temperature changes, high pressure flushing and the like and lasts for the life of the tarpaulin.

### EXAMPLE 2

A band of polyester metallized prism type reflecting sheet, "Reflexite® AP 1000", is applied to a wider band of tarpaulin cloth with a PVC coating, "duralak", by means of a semiviscous PVC adhesive. On top of the reflecting sheet is applied a transparent, colourless or coloured, flexible PVC film of a slightly larger width than the band of reflecting sheet with its edges extending beyond those of the reflecting sheet, and the film is adhered to the reflecting sheet by moderate heating while pressing out any air bubbles. The band of tarpaulin cloth is most preferably white when the transparent film is colourless or else the same colour as the transparent film for "cosmetic" reasons.

Thereafter, the aggregate band is moved through a high frequency welding machine, "Kifel"® in which the transparent PVC film is welded to the tarpaulin cloth along the edges.

When the resulting reflective band is applied to a tarpaulin by hot air fusion and is cut off at the ends, the end portions may be sealed by fusing a strip of plain tarpaulin cloth or transparent PVC film across the end portion. Another solution may be to stamp out and peel off about 1 cm of reflecting sheet from the liner of silicone paper for each standard length of reflecting sheet before it is applied to the band of tarpaulin cloth, thus preparing lateral stripes to be welded in the high frequency welding machine.

## Claims

1. A tarpaulin comprising a fabric coated with a plastics material, preferably PVC, polyamide or polyprene, and provided with a decoration of a reflecting material, CHARACTERIZED in that it carries a piece of reflecting sheet anchored by high frequency welding or heat application to a piece of tarpaulin cloth, whose plastics coating is of the same type as or is compatible with that of the tarpaulin, said piece of tarpaulin cloth provided with reflecting sheet, optionally formed in a desired shape, being applied to the tarpaulin by hot air fusion.

2. A tarpaulin according to claim 1, CHARACTERIZED in that it comprises a polyester fabric coated with PVC.

3. A tarpaulin according to claim 1 or 2, CHARACTERIZED in that the reflecting sheet is a retroreflecting sheet of the glass bead type comprising a large number of fine glass beads embedded with a specular base in a plastics sheet or of the prism (cube corner) type with a large number of prisms impressed in the surface of a plastics sheet so that light is reflected through the sheet.

4. A tarpaulin according to claim 3, CHARACTERIZED in that the reflecting sheet is a retroreflecting PVC sheet of the naked prism type.

5. A tarpaulin comprising a fabric coated with a plastics material, preferably PVC, polyamide or polyprene, and provided with a decoration of a reflecting material, CHARACTERIZED in that it carries a piece of reflecting sheet of the glass bead type or the metallised or sealed prism type applied by adhesion to a piece of tarpaulin cloth, whose plastics coating is of the same type as or is compatible with that of the tarpaulin, and anchored to said piece and protected by an overlying transparent flexible film of a polymeric material compatible with the plastics coating of said piece, the edges of said film extending beyond those of the reflecting sheet and being high frequency welded to the piece of tarpaulin cloth, said piece of tarpaulin cloth provided with reflecting sheet, optionally formed in a desired shape, being in turn applied to the tarpaulin by hot air fusion.

6. A tarpaulin comprising a fabric coated with a plastics material, preferably PVC, polyamide or polyprene, and provided with a decoration of a reflecting material, CHARACTERIZED in that it carries a piece of reflecting sheet of the glass bead type or the metallized or sealed prism type applied by adhesion directly to the tarpaulin and anchored to the tarpaulin and protected by an overlying transparent flexible film of a polymeric material compatible with the plastics coating of the tarpaulin, the edges of said film extending beyond those of the reflecting sheet and being high frequency welded to the tarpaulin.

7. A method of providing a tarpaulin comprising a fabric coated with a plastics material, preferably PVC, polyamide or polyprene, with a decoration of a reflecting material, CHARACTERIZED in that a reflecting sheet is anchored by high frequency welding or heat application to a piece of tarpaulin cloth, whose plastics coating is of the same type as or is compatible with that of the tarpaulin, and then the piece of tarpaulin cloth provided with reflecting sheet, optionally formed in a desired shape, is applied to the tarpaulin by hot air fusion.

8. A method according to claim 7, CHARACTERIZED in that the tarpaulin comprises a polyester fabric coated with PVC.

9. A method according to claim 7 or 8, CHARACTERIZED in that the reflecting sheet is a retroreflecting sheet of the glass bead type comprising a large number of fine glass beads embedded with a specular base in a plastics sheet, or of the prism (cube corner) type with a large number of prisms impressed in the surface of a plastics sheet so that light is reflected through the sheet.

10. A method according to any of claims 7-9, CHARACTERIZED in that the reflecting sheet is a retroreflecting PVC sheet of the prism type.

11. A method of providing a tarpaulin comprising a fabric coated with a plastics material, preferably PVC, polyamide or polyprene, with a decoration of a reflecting material, CHARACTERIZED in that a reflecting sheet of the glass bead type or the metallized or sealed prism type is applied by means of an adhesive to a piece of tarpaulin cloth, whose plastics coating is of the same type as or is compatible with that of the tarpaulin, and is anchored to said piece and protected by placing a transparent flexible film of a polymeric material compatible with the plastics coating of said piece on top of the reflecting sheet with its edges extending beyond those of the reflecting sheet and high frequency welding it to the piece of tarpaulin cloth along the edges, and then the piece of tarpaulin cloth provided with reflecting sheet, optionally formed in a desired shape, is applied to the tarpaulin by hot air fusion.

12. A method according to any of claims 7-11, CHARACTERIZED in that the piece of tarpaulin cloth provided with reflecting sheet is applied to the tarpaulin by means of a hot air apparatus (heat gun), whose hot air jet is introduced between the underside of the tarpaulin cloth and the surface of the tarpaulin so that the tarpaulin cloth fuses to the tarpaulin without the reflecting sheet being damaged.

13. A method according to claim 12, CHARACTERIZED in that the temperature of the hot air jet is 400-600 °C.

14. A method of providing a tarpaulin comprising a fabric coated with a plastics material, preferably PVC, polyamide or polyprene, with a decoration of a reflecting material, CHARACTERIZED in that a reflecting sheet of the glass bead type or the metallized or sealed prism type is applied directly to a tarpaulin by means of an adhesive and is anchored to the tarpaulin and protected by placing a transparent flexible film of a polymeric material compatible with the plastics coating of the tarpaulin on top of the reflecting sheet with its edges extending beyond those of the reflecting sheet and high frequency welding it to the tarpaulin along the edges.

15. A piece of tarpaulin cloth to which a reflecting sheet is anchored by high frequency welding or heat application to be applied as a reflective decoration to a tarpaulin by hot air fusion.

16. A piece of tarpaulin cloth according to claim 15 wherein the reflecting sheet is a retroreflecting sheet of the glass bead type comprising a large number of fine glass beads embedded with a specular base in a plastics sheet or of the prism (cube corner) type with a large number of prisms impressed in the surface of a plastics sheet so that light is reflected through the sheet.

17. A piece of tarpaulin cloth according to claim 16 wherein the reflecting sheet is a retroreflecting PVC sheet of the naked prism type.

18. A piece of tarpaulin cloth to which a reflecting sheet of the glass bead type or the metallized or sealed prism type is applied by adhesion and is anchored to said piece and protected by an overlying transparent flexible film of a polymeric material compatible with the plastics coating of said piece, the edges of said film extending beyond those of the reflecting sheet and being high frequency welded to said piece, to be applied as a reflective decoration to a tarpaulin by hot air fusion.

19. A piece of tarpaulin cloth acording to any one of claims 15-18 being in the form of a narrow band.

## Patentansprüche

1. Plane, enthaltend ein Gewebe, das mit einem Plastikmaterial, vorzugsweise PVC, Polyamid oder Polypren, beschichtet ist, und das mit einer Dekoration aus einem reflektierenden Material versehen ist, dadurch gekennzeichnet, daß sie ein Stück reflektierende Folie trägt, das durch Hochfrequenzschweißung oder Wärmeanwendung an einem Stück Planengewebe befestigt ist, dessen Plastikbeschichtung von der gleichen Art wie die der Plane oder zu jener der Plane kompatibel ist, wobei das mit reflektierender Folie versehene Stück Planengewebe, das optional in einer gewünschten Form gestaltet ist, an der Plane durch Heißluftverschmelzung angebracht ist.

2. Plane nach Anspruch 1, dadurch gekennzeichnet, daß sie ein mit PVC beschichtetes Polyestergewebe umfaßt.

3. Plane nach Anspruch 1 oder 2, dadurch gekennzeichnet, daß die reflektierende Folie eine rückstrahlende Folge des Glasperlentyps, die eine große Anzahl feiner Glasperlen enthält, die mit einem spiegelartigen Trägermaterial in einer Plastikfolie eingebettet sind, oder des Prismen- (Kubusecken-) Typs mit einer großen Anzahl von Prismen ist, die in die Oberfläche einer Plastikfolie eingepreßt sind, so daß Licht durch die Folie reflektiert wird.

4. Plane nach Anspruch 3, dadurch gekennzeichnet, daß die reflektierende Folie eine rückstrahlende PVC-Folie des Nacktprismentyps ist.

5. Plane, enthaltend ein Gewebe, das mit einem Plastikmaterial, vorzugsweise PVC, Polyamid oder Polypren, beschichtet ist, und das mit einer Dekoration aus einem reflektierenden Material versehen ist, dadurch gekennzeichnet, daß sie ein Stück aus einer reflektierenden Folie des Glasperlentyps oder des metallisierten oder versiegelten Prismentyps trägt, das durch Adhäsion an einem Stück Planengewebe angebracht ist, dessen Plastikbeschichtung von der gleichen Art wie die der Plane oder zu jener der Plane kompatibel ist, und an diesem Stück durch einen darüberliegenden transparenten, flexiblen Film aus einem mit der Plastikbeschichtung dieses Stückes kompatiblen Polymermaterial befestigt und geschützt ist, wobei sich die Ränder dieses Filmes über jene der reflektierenden Folie hinauserstrecken und mit dem Stück Planengewebe hochfrequenzverschweißt sind, wobei das mit reflektierender Folie versehene Stück Planengewebe, das optional in einer gewünschten Form gestaltet ist, wiederum an der Plane durch Heißluftverschmelzung angebracht ist.

6. Plane, enthaltend ein Gewebe, das mit einem Plastikmaterial, vorzugsweise PVC, Polyamid oder Polypren, beschichtet ist, und das mit einer Dekoration aus einem reflektierenden Material versehen ist, dadurch gekennzeichnet, daß sie ein Stück aus einer reflektierenden Folie des Glasperlentyps oder des metallisierten oder versiegelten Prismentyps trägt, das durch Adhäsion direkt an der Plane angebracht ist, und an der Plane durch einen darüberliegenden transparenten, flexiblen Film aus einem mit der Plastikbeschichtung der Plane kompatiblen Polymermaterial befestigt und geschützt ist, wobei sich die Ränder dieses Filmes über jene der reflektierenden Folie hinauserstrecken und mit der Plane hochfrequenzverschweißt sind.

7. Verfahren zum Schaffen einer Plane, enthaltend ein Gewebe, das mit einem Plastikmaterial, vorzugsweise PVC, Polyamid oder Polypren, beschichtet ist, und das mit einer Dekoration aus einem reflektierenden Material versehen ist, dadurch gekennzeichnet, daß eine reflektierende Folie durch Hochfrequenzschweißung oder Wärmeanwendung an einem Stück Planengewebe befestigt wird, dessen Plastikbeschichtung von der gleichen Art wie die der Plane oder zu jener der Plane kompatibel ist, und daß dann das mit reflektierender Folie versehene Stück Planengewebe, das optional in einer gewünschten Form gestaltet ist, an der Plane durch Heißluftverschmelzung angebracht wird.

8. Verfahren nach Anspruch 7, dadurch gekennzeichnet, daß die Plane ein mit PVC beschichtetes Polyestergewebe umfaßt.

9. Verfahren nach Anspruch 7 oder 8, dadurch gekennzeichnet, daß die reflektierende Folie eine rückstrahlende Folie des Glasperlentyps, die eine große Anzahl feiner Glasperlen enthält, die mit einem spiegelartigen Trägermaterial in einer Plastikfolie eingebettet sind, oder des Prismen- (Kubusecken-) Typs mit einer großen Anzahl von Prismen ist, die in die Oberfläche einer Plastikfolie eingepreßt sind, so daß Licht durch die Folie reflektiert wird.

10. Verfahren nach einem der Ansprüche 7 bis 9, dadurch gekennzeichnet, daß die reflektierende Folie eine rückstrahlende PVC-Folie des Nacktprismentype ist.

11. Verfahren zum Schaffen einer Plane, enthaltend ein Gewebe, das mit einem Plastikmaterial, vorzugsweise PVC, Polyamid oder Polypren, beschichtet ist, und das mit einer Dekoration aus einem reflektierenden Material versehen ist, dadurch gekennzeichnet, daß eine reflektierende Folie des Glasperlentyps oder des metallisierten oder versiegelten Prismentyps mittels eines Klebstoffes an einem Stück Planengewebe angebracht wird, dessen Plastikbeschichtung von der gleichen Art wie die der Plane oder zu jener der Plane kompatibel ist, und daß es an diesem Stück befestigt wird und geschützt wird, indem ein transparenter, flexibler Film aus einem mit der Plastikbeschichtung dieses Stückes kompatiblen Polymermaterial auf diese reflektierende Folie gelegt wird, wobei sich seine Ränder über jene der reflektierenden Folie hinauserstrecken, und mit dem Stück Planengewebe entlang der Ränder hochfrequenzverschweißt wird, und daß dann das mit reflektierender Folie versehene Stück Planengewebe, das optional in einer gewünschten Form gestaltet ist, an der Plane durch Heißluftverschmelzung angebracht wird.

12. Verfahren nach einem der Ansprüche 7 bis 11, dadurch gekennzeichnet, daß das Stück mit reflektierender Folie versehene Planengewebe an der Plane mittels eines Heißluftgerätes (Heizpistole) angebracht wird, dessen Heißluftstrom zwischen die Unterseite des Planengewebes und die Oberfläche der Plane zugeführt wird, so daß das Planengewebe mit der Plane verschmilzt, ohne daß die reflektierende Folie beschädigt wird.

13. Verfahren nach Anspruch 12, dadurch gekennzeichnet, daß die Temperatur des Heißluftstromes 400-600 °C beträgt.

14. Verfahren zum Schaffen einer Plane, enthaltend ein Gewebe, das mit einem Plastikmaterial, vorzugsweise PVC, Polyamid oder Polypren, beschichtet ist, und das mit einer Dekoration aus einem reflektierenden Material versehen ist, dadurch gekennzeichnet, daß eine reflektierende Folie des Glasperlentyps oder des metallisierten oder versiegelten Prismentyps direkt an einer Plane mittels eines Klebstoffes angebracht wird und an der Plane befestigt und geschützt wird, indem ein transparenter, flexibler Film aus einem mit der Plastikbeschichtung der Plane kompatiblen Polymermaterial oben auf die reflektierende Folie gelegt wird, wobei sich seine Ränder über jene der reflektierenden Folie hinauserstrecken, und mit der Plane entlang der Ränder hochfrequenzverschweißt wird.

15. Ein Stück Planengewebe, an dem eine reflektierende Folie durch Hochfrequenzschweißung oder Wärmeanwendung befestigt wird, um als eine reflektierende Dekoration an einer Plane mittels Heißluftverschmelzung angebracht zu werden.

16. Ein Stück Planengewebe nach Anspruch 15, dadurch gekennzeichnet, daß die reflektierende Folie eine rückstrahlende Folie des Glasperlentyps, die eine große Anzahl feiner Glasperlen enthält, die mit einem spiegelartigen Trägermaterial in einer Plastikfolie eingebettet sind, oder des Prismen- (Kubusecken-) Typs mit einer großen Anzahl von Prismen ist, die in die Oberfläche einer Plastikfolie eingepreßt sind, so daß Licht durch die Folie reflektiert wird.

17. Ein Stück Planengewebe nach Anspruch 16, dadurch gekennzeichnet, daß die reflektierende Folie eine rückstrahlende PVC-Folie des Nacktprismentyps ist.

18. Ein Stück Planengewebe, an dem eine reflektierende Folie des Glasperlentyps oder des metallisierten oder versiegelten Prismentyps durch Adhäsion angebracht ist und die an dem Stück durch einen darüberliegenden transparenten, flexiblen Film aus einem mit der Plastikbeschichtung dieses Stückes kompatiblen Polymermaterial befestigt und geschützt ist, wobei sich die Ränder dieses Filmes über jene der reflektierenden Folie hinauserstrecken und mit diesem Stück hochfrequenzverschweißt sind, um als eine reflektierende Dekoration auf einer Plane durch Heißluftverschmelzung angebracht zu werden.

19. Ein Stück Planengewebe nach einem der Ansprüche 15 bis 18, dadurch gekennzeichnet, daß es die Form eines schmalen Bandes hat.

## Revendications

1. Une bâche comprenant un tissu recouvert de matière plastique, de préférence PVC, polyamide ou polyprène, et munie d'une décoration en matériau réfléchissant, caractérisée en ce qu'elle porte un morceau de feuille réfléchissante fixée par soudure à haute fréquence ou application de chaleur à un morceau de tissu de bâche, dont le revêtement en matière plastique est du même type ou est compatible avec celui de la bâche, ledit morceau de tissu de bâche portant une feuille réfléchissante éventuellement formée sous une configuration choisie, étant appliqué sur la bâche par fusion à l'air chaud.

2. Une bâche selon la revendication 1, caractérisée en ce qu'elle comprend un tissu de polyester recouvert de PVC.

3. Une bâche selon la revendication 1 ou 2, caractérisée en ce que la feuille réfléchissante est une feuille catadioptrique de type billes de verte comprenant un grand nombre de fines billes de verte enchassées avec une base réfléchissante dans une feuille de matière plastique ou de type prisme (arête de cube) avec un grand nombre de prismes imprimés à la surface d'une feuille de matière plastique, de manière à ce que la lumière soit réfléchie à travers la feuille.

4. Une bâche selon la revendication 3, caractérisée en ce que la feuille réfléchissante est une feuille rétroréfléchissante ou catadioptrique de PVC du type à prisme nu.

5. Une bâche comprenant un tissu recouvert d'une matière plastique, de préférence du PVC, du polyamide ou du polyprène, et portant une décoration en matériau réfléchissant, caractérisée en ce qu'elle porte un morceau de feuille réfléchissante du type billes de verte ou du type à prisme métallisé ou scellé appliqué par adhésion sur un morceau de tissu de bâche, dont le revêtement en matière plastique est du même type ou est compatible avec celui de la bâche, et fixé audit morceau et protégé par un film de couverture, souple et transparent, en un matériau polymère compatible avec le revêtement en matière plastique dudit morceau, les bords dudit film dépassant les bords de la feuille réfléchissante et étant soudés par haute fréquence au morceau de tissu de bâche, ledit morceau de tissu de bâche muni de feuille réfléchissante, éventuellement formé sous une configuration choisie, étant à son tour appliquée sur la bâche par fusion à l'air chaud.

6. Une bâche comprenant un tissu recouvert d'une matière plastique, de préférence PVC, polyamide ou polyprène, et muni d'une décoration en matériau réfléchissant, caractérisée en ce qu'elle porte un morceau de feuille réfléchissante du type à billes de verte ou du type à prisme métallisé ou scellé, appliqué par adhésion directement sur la bâche et fixé à la bâche, et protégé par un film de couverture, souple et transparent en matériau polymère compatible avec le revêtement en matière plastique de la bâche, les bords dudit film dépassant les bords de la feuille réfléchissante et étant soudés par haute fréquence à la bâche.

7. Un procédé de fabrication d'une bâche comprenant un tissu recouvert d'une matière plastique, de préférence PVC, polyamide ou polyprène, avec une décoration en matériau réfléchissant, caractérisé en ce qu'une feuille réfléchissante est fixée par soudage à haute fréquence ou application de chaleur à un morceau de tissu de bâche, dont le revêtement en matière plastique est du même type ou est compatible avec celui de la bâche, et ensuite le morceau de tissu de bâche muni de la feuille réfléchissante, éventuellement formé sous une configuration voulue, est appliqué sur la bâche par fusion à l'air chaud.

8. Procédé selon la revendication 7, caractérisé en ce que la bâche comprend un tissu de polyester recouvert de PVC.

9. Procédé selon la revendication 7 ou 8, caractérisé en ce que la feuille réfléchissante est une feuille catadioptrique de type à billes de verte comprenant un grand nombre de petites billes de verte enchâssées avec une base réfléchissante dans une feuille en matière plastique ou de type prisme (arête de cube) avec un grand nombre de prismes imprimés à la surface d'une feuille de matière plastique de manière à ce que la lumière soit réfléchie à travers la feuille.

10. Un procédé selon l'une quelconque des revendications 7 à 9, caractérisé en ce que la feuille réfléchissante est une feuille catadioptrique ou rétroréfléchissante de PVC de type prismatique.

11. Un procédé de fabrication d'une bâche comprenant un tissu recouvert de matière plastique, de préférence PVC, polyamide ou polyprène, comportant une décoration en matériau réfléchissant, caractérisé en ce qu'une feuille réfléchissante de type à billes de verte ou de type prismatique métallisé ou scellé est appliquée à l'aide d'un adhésif sur un morceau de tissu de bâche, dont le revêtement en matière plastique est du même type ou compatible avec celui de la bâche, et fixée audit morceau et protégée en plaçant un film souple et transparent d'un matériau polymère compatible avec le revêtement en matière plastique dudit morceau par-dessus la feuille réfléchissante avec ses bords qui dépassent ceux de la feuille réfléchissante et en soudant par haute fréquence ce film au morceau de tissu de bâche le long des bords, et ensuite le morceau de bâche muni de la feuille réfléchissante, éventuellement formée sous une configuration choisie, est appliqué sur la bâche par fusion à l'air chaud.

12. Un procédé selon l'une quelconque des revendications 7 à 11, caractérisé en ce que le morceau de tissu de bâche muni de feuilles réfléchissantes est appliqué sur la bâche à l'aide d'un appareil à air chaud (canon thermique) dont le jet d'air chaud est introduit entre la face sous-jacente du tissu de bâche et la surface de la bâche de manière à souder le tissu de bâche sur la bâche sans endommager la feuille réfléchissante.

13. Un procédé selon la revendication 12, caractérisé en ce que la température du jet d'air chaud est comprise entre 400 et 600°C.

14. Un procédé de fabrication d'une bâche comprenant un tissu recouvert de matière plastique, de préférence PVC, polyamide ou polyprène, comportant une décoration en matériau réfléchissant, caractérisé en ce qu'une feuille réfléchissante de type à billes de verte ou de type prismatique métallisé ou scellé est appliquée directement sur une bâche à l'aide d'un adhésif et fixée à la bâche et protégée en plaçant un film souple et transparent d'un matériau polymère compatible avec le revêtement en matière plastique de la bâche par-dessus la feuille réfléchissante avec ses bords dépassant ceux de la feuille réfléchissante et en soudant par haute fréquence ce film sur la bâche le long des bords.

15. Un morceau de tissu de bâche auquel est fixé une feuille réfléchissante par soudage haute fréquence ou application de chaleur, destinée à être appliquée en tant que décoration réfléchissante sur une bâche par fasion à l'air chaud.

16. Un morceau de tissu de bâche selon la revendication 15, dans lequel la feuille réfléchissante est une feuille catadioptrique du type à billes de verte comprenant un grand nombre de billes de verte enchâssées avec une base réfléchissante dans une feuille de matière plastique ou de type prismatique (arête de cube) avec un grand nombre de prismes imprimés à la surface d'une feuille en matière plastique, de manière à ce que la lumière se réfléchisse à travers la feuille.

17. Un morceau de tissu de bâche selon la revendication 16, dans lequel la feuille réfléchissante est une feuille de PVC catadioptrique du type à prisme nu.

18. Un morceau de tissu de bâche sur lequel une feuille réfléchissante du type à billes de verre ou du type à prisme métallisé ou scellé est appliquée par adhésion et fixée sur ledit morceau et protégée par un film de couverture souple et transparent d'un matériau polymère compatible avec le revêtement de matière plastique dudit morceau, les bords dudit film dépassant les bords de la feuille réfléchissante et étant soudés par haute fréquence audit morceau, destiné à être appliqué en tant que décoration réfléchissante sur une bâche par fusion à l'air chaud.

19. Un morceau de tissu de bâche selon l'une quelconque des revendications 15 à 18 sous la forme d'une bande étroite.
